# EUROPEAN PATENT APPLICATION

(11) **EP 2 159 982 A1**
(43) Date of publication of application: **03.03.2010**
(21) Application number: 08757682.3
(22) Date of filing: 11.06.2008
(51) Int. Cl.: H04L 29/06, H04L 12/58

(54) **METHOD, INTERCONNECTION GATEWAY AND CLIENT OF FILE TRANSFER**

(30) Priority: 14.06.2007 CN 200710108479
(71) Applicant: Huawei Technologies Co., Ltd., Longgang District Shenzhen Guangdong 518129 (CN)
(72) Inventor: MU, Lunjian, Shenzhen, Guangdong 518129 (CN); BIAN, Yonggang, Shenzhen, Guangdong 518129 (CN)
(74) Representative: Barth, Stephan Manuel
(86) International application number: PCT/CN2008/071271
(87) International publication number: WO 2008/151572

(57) **Abstract**

The present disclosure discloses a file transfer method, gateway and client and relates to communications. The method includes: obtaining a file transfer negotiation request via a first protocol type from a first domain; obtaining information returned by a second domain; determining a negotiation result with respect to the file transfer negotiation request according to the information returned by the second domain; and conducting file transfer between the first domain and the second domain according to the negotiation result. The gateway includes a first transferring unit, a second transferring unit, a first negotiation result determining unit and a first file transferring unit. The client includes a negotiation request obtaining unit and a replying unit. With the invention, negotiation is realized before file transfer between the Session Initiation Protocol (SIP) domain and the Instant Messaging and Presence Service (IMPS) domain so as to avoid unnecessary file transfer between different domains according to the negotiation result.

## Description

### Field of the Invention

The present disclosure relates to communications, and in particular, to a method for transferring a file, gateway and client thereof.

### Background of the Invention

Nowadays, for users of mobile communication services, there are two types of messaging services: messaging services in the Instant Messaging and Presence Service (IMPS) domain, which are based on the Client Server Protocol (CSP) or Server Server Protocol (SSP); messaging services in the Session Initiation Protocol (SIP) domain such as SIP Instant Messaging and Presence Leveraging Extensions (SIMPLE) and Converged IP Messaging (CPM), which are based on SIP.

File transfer is a special means of interaction of service messages and has unique features: A sender may negotiate with a receiver before sending a file, for example, inquiring whether the receiver agrees to receive the file; a file being transferred has such properties as file name and file size; and the transfer of a file is unidirectional. The following elaborates on the special features of file transfer by describing a file transfer process in a SIP domain and an IMSP domain respectively.

Within the SIP domain, a file is transferred between two users according to the following process:

Before the file is transferred, a Session Description Protocol (SDP) negotiation process may be conducted at the control layer to negotiate a Message Session Relay Protocol (MSRP) session for file transfer, where metadata information of the file is exchanged in the SDP negotiation process and the negotiation may be initiated by the file sender or the file receiver.

Within the IMPS domain, a file is transferred between two users according to the following process:

In the IMPS domain, there is no file sending negotiation process at the control layer; instead, the sender sends the file according to its client capability and the receiving server chooses reception according to the capability of the receiving client; optionally, the sender may inquire whether the peer end agrees to receive the file via an INVITE transaction before sending the file. A server in the IMSP domain may transfer a file exchanged between IMPS domain devices via a SendMessage transaction, with the file content carried in the Content element of the message and the file name, type and size described in the information structure of the message.

The inventor, however, finds that negotiation is required before file transfer between devices in either the SIP domain or the IMPS domain so as to avoid unnecessary file transfer. In the case of file transfer between the SIP domain and the IMPS domain, no appropriate negotiation method is available. As a result, it is inevitable that a file transferred between the SIP domain and the IMPS domain may be an unnecessary file that the receiving end is unable to or does not agree to receive.

### Summary of the Invention

Embodiments of the present disclosure provide a file transfer method, gateway and client so as to realize negotiation before file transfer between a SIP domain and an IMPS domain. The technical solution is as follows:
A file transfer method includes:
   obtaining a file transfer negotiation request via the first protocol sent by the first domain; obtaining a feedback of the second domain; determining a negotiation result corresponding to the file transfer negotiation request according to the feedback of the second domain; and transferring a file between the first domain and the second domain according to the result of the negotiation.
A gateway includes:
   a first transferring unit, adapted to obtain a file transfer negotiation request via a first protocol type from a first domain;
   a second transferring unit, adapted to obtain information returned by a second domain;
   a first negotiation result determining unit, adapted to determine a negotiation result according to the information returned by the second domain, and
   a first file transferring unit, adapted to transfer a file between the first domain and the second domain according to the negotiation result.
A client includes:
   a negotiation request obtaining unit, adapted to receive an IMPS file transfer negotiation request based on addition of a file metadata description; and
   a replying unit, adapted to determine whether the client is capable of file transfer according to the client's capability, and if incapable, adapted to reply with a file transfer negotiation failure response or if capable, adapted to reply with an appropriate file transfer negotiation response according to a user response or user configuration.
Another file transfer method includes:
   sending a file transfer negotiation request via SIP protocol to a SIP domain with respect to transfer of the file after receiving an IMPS message carrying a file from an IMPS domain;
   obtaining, information carried in a response returned by the SIP domain with respect to the file transfer negotiation request; and determining a negotiation result with respect to the file transfer negotiation request according to the information carried in the response and transferring file between the IMPS domain and the SIP domain according to the negotiation result.
Another gateway includes:
   a negotiation request transferring unit, adapted to send a file transfer negotiation request via SIP protocol with respect to transfer of the file to a device in a SIP domain, after receiving an IMPS message carrying a file from an IMPS domain;
   a second negotiation result determining unit, adapted to obtain information carried in a response returned by the SIP domain with respect to the file transfer negotiation request; and
   a second file transferring unit, adapted to determine a negotiation result with respect to the file transfer negotiation request according to information carried in the response and transfer file between the IMPS domain and the SIP domain according to the negotiation result.

According to the embodiments of the present disclosure, a file transfer negotiation request via a first protocol type sent by a first domain is obtained; information returned by a second domain is obtained; a negotiation result corresponding to the file transfer negotiation request is determined according to the information returned by the second domain and file transfer is conducted between the first domain and the second domain according to the negotiation result. Therefore, the embodiments of the present disclosure realize negotiation before file transfer between the SIP domain and the IMPS domain so as to avoid unnecessary file transfer between different domains according to the negotiation result.

### Brief Description of the Drawings

FIG. 1 shows a networking diagram where an IMPS domain and a SIP domain are interconnected in a first embodiment of the present disclosure;
FIG. 2 shows a flowchart of a file transfer method in the first embodiment of the present disclosure;
FIG. 3 shows a flowchart where the SIP domain sends a file to the IMPS domain in the first embodiment of the present disclosure;
FIG. 4 shows a flowchart of a file transfer method in a second embodiment of the present disclosure;
FIG. 5 shows a flowchart where the SIP domain sends a file to the IMPS domain in the second embodiment of the present disclosure;
FIG. 6 shows a flowchart of a file transfer method in a third embodiment of the present disclosure;
FIG. 7 shows a flowchart where the IMPS domain sends a file to the SIP domain in the third embodiment of the present disclosure;
FIG. 8 shows a flowchart of a file transfer method in a fourth embodiment of the present disclosure;
FIG. 9 shows a flowchart where an IMPS client processes a file transfer negotiation request that carries an additional file metadata description;
FIG. 10 shows a structure of a gateway provided in an embodiment of the present disclosure;
FIG. 11 shows a structure of another gateway provided in an embodiment of the present disclosure; and
FIG. 12 shows a structure of a client provided in an embodiment of the present disclosure.

### Detailed Description of the Invention

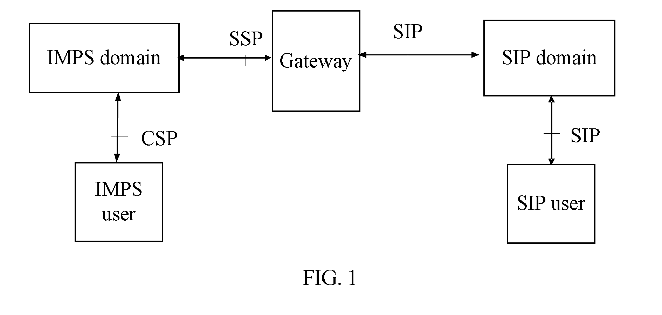

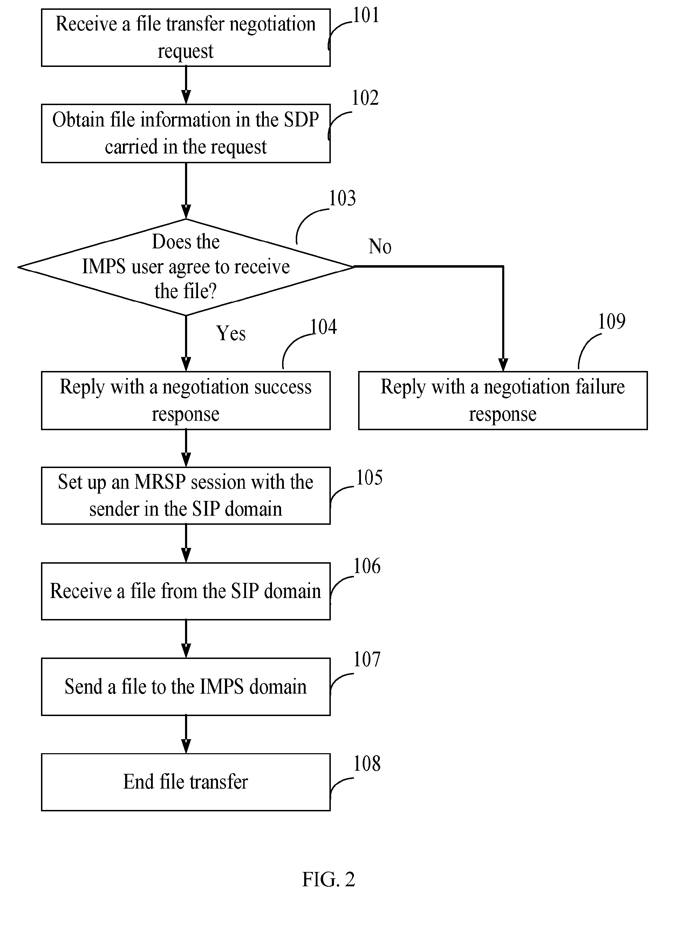

A file transfer method provided according to the first embodiment of the present disclosure is implemented based on the networking structure shown in FIG. 1. In this embodiment, the first domain is a SIP domain and the first protocol is SIP and/or SDP; the second domain is an IMPS domain and the second protocol is IMPS. A file is transferred from the SIP domain to the IMPS domain according to the following process: obtaining a SIP file transfer negotiation request from the SIP domain; returning a SIP file transfer negotiation response with respect to the file transfer negotiation request to the SIP domain according to the feedback of the IMPS domain; determining a negotiation result according to the feedback of the IMPS domain and transferring the file between the domains according to the negotiation result. As shown in FIG. 2, the method includes:

S101. A gateway (GW) receives a SIP file transfer negotiation request from the SIP domain; the negotiation request carries an SDP description that describes information of the file to be transferred.

If no session is set up between the SIP domain and the IMPS domain, the file transfer negotiation request is a new SIP INVITE message; if a session already exists between the SIP domain and the IMPS domain, the file transfer negotiation request is a SIP re-INVITE message; if an early session exists between the SIP domain and the IMPS domain, the file transfer negotiation request may be a SIP UPDATE message.

S102. The GW reads the SDP description in the SIP file transfer negotiation request and extracts the information of the file to be transferred as described in the SDP description.

S103. The GW judges whether the IMPS user agrees to receive the file; if the IMPS user agrees to receive the file, the process proceeds to step S 104 or else to step S109.

Judging whether the IMPS user agrees to receive the file falls into two situations:
1. Judging whether the user is able to receive the file
   The GW may obtain profile information or network information of the IMPS user and determine whether the user is able to receive the file.
2. Judging whether the user is willing to receive the file

An inquiry is sent to the IMPS server, which, upon reception of the inquiry, sends an inquiry to the user and forwards the reply of the IMPS user to the GW, or determines whether the user agrees to receive the file according to the user configuration and returns an appropriate reply to the GW; the GW determines whether the user is willing to receive the file according to the reply returned by the IMPS server. The inquiry and reply may be implemented via an Invite or System Message, where the Invite message may be an instant message or an end-to-end application.

S104. The GW returns a file transfer negotiation success response to the SIP domain.

S105. The GW sets up an MSRP session for file transfer according to the negotiation result.

S106. The GW receives the file sent by the SIP domain via the newly established MSRP session.

S107. The GW maps the received file into an IMPS message that the IMPS domain can receive, and then forward the message to the IMPS domain.

S108. The GW ends file transfer and negotiates a new session or ends the current session. The process ends.

S109. The GW returns a file transfer negotiation failure response to the SIP domain. The state before the SIP domain sends the file transfer negotiation request is restored. Before the request is sent, there may or may not be a session between the GW and the SIP domain. The process ends.

In the first embodiment of the present disclosure, if the file transfer negotiation request sent by the SIP domain includes multiple file sending requests, the IMPS domain checks whether the user agrees to receive the file with respect to each file sending request and synthesizes the check results into one SDP description, which is carried in a SIP response and returned to the SIP domain.

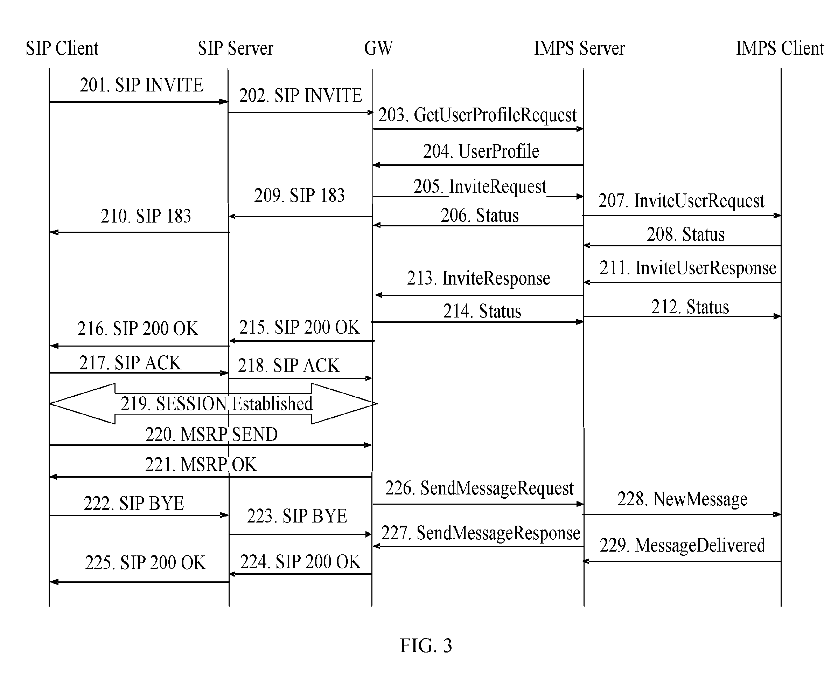

An example is described to explain the first embodiment in detail. In the example, the first domain is a SIP domain and the first protocol type is SIP and/or SDP; the second domain is an IMPS domain and the second protocol type is IMPS. A detailed process of the example is shown in FIG. 3, including:

S201. The SIP domain wants to send a file to the IMPS domain and sends a SIP INVITE request via a SIP client (including SIP based service clients); the request carries an SDP description for file transfer, including information indicating the request is a file sending request, and the name, type, size and Hash value of the file. The SDP description may be as follows:
v=0
o=alice 2890844526 2890844526 IN IP4 alicepc.example.com
s=
c=IN IP4 alicepc.example.com
t=00
m=message 7654 TCP/MSRP *
i=This is my latest picture
a=sendonly
a=accept-types:message/cpim
a=accept-wrapped-types: *
a=path:msrp://alicepc.example.com:7654/jshA7we;tcp
a=file-selector:name:"My cool picture.jpg" type:image/jpeg
   size:4092 hash:sha-1:72245FE8653DDAF371362F86D471913EE4A2CE2E
a=disposition:render
a=file-date:creation:"Mon, 15 May 2006 15:01:31 +03:00"

S202. The SIP INVITE request is first routed to the SIP server (including the SIP/IP core and some SIP based service servers); the SIP server carries out certain processing, for example, determining the next hop, and forwards the SIP INVITE request to the GW.

S203. The GW receives the SIP INVITE request and determines it is a file sending request according to the SDP description carried in the message; the GW requests profile **information of the IMPS user from the IMPS server, for example, via a** GetUserProfileRequest.

S204. The GW receives the UserProfile response from the IMPS server and determines whether the IMPS user is able to receive the file according to the user profile.

S205. After determining that the IMPS user is able to receive the file, the GW further sends an InviteRequest to the IMPS server, inquiring whether the user is willing to receive the file. In the request, the Invite-Type element may be set to "IM" (instant message) or "AP" (end-to-end application). In the case of "IM", after successful negotiation, the file is carried in an instant message; in the case of "AP", after successful negotiation, the file is transferred by the application agreed in the negotiation. In this example, the Invite-Type element is set to "IM". The Invite-Reason element of the request may describe that the Invite request is for file transfer and include properties of the file to be transferred obtained from the SDP description. The Validity element of the request may be set according to GW settings. The value of Validity is equal to the time when the SIP INVITE request can be held. If no reply is received by the GW from the IMPS domain within the time, the GW returns a failure response to the SIP domain. If the GW determines that the IMPS domain is unable to receive the file, a SIP response is returned to the sender in the SIP domain; the SDP description in the SIP response sets the file transfer streaming port to 0, indicating unsuccessful negotiation.

S206. The IMPS server sends a Status response with respect to the InviteRequest to the GW.

S207. The IMPS server converts the InviteRequest into an InviteUserRequest and sends it to the IMPS client.

S208. The IMPS client receives the InviteUserRequest, presents it to the IMPS user and sends a Status response to the IMPS server.

S209. After step S204, the GW may send a SIP 183 response (SIP provisional response) corresponding to the SIP INVITE request to the SIP domain; the provisional response is first routed o the SIP server.

S210. The SIP server forwards the SIP 183 response to the SIP client.

S211. In the IMPS domain, after step S208, the IMPS user agrees to receive the file and sends an InviteUserResponse to the IMPS server via the IMPS client, where the Invite-Acceptance attribute is set to "Yes", indicating the IMPS user agrees to receive an instant message. If the IMPS user does not agree to receive the file, the Invite-Acceptance attribute is set to "No".

S212. The IMPS server receives the InviteUserResponse and sends a corresponding Status response to the IMPS client.

S213. The IMPS server converts the InviteUserResponse into an InviteResponse and sends the InviteResponse to the GW.

S214. The GW sends a Status response to the IMPS server.

S215. The GW determines the IMPS user agrees to receive the file according to the Invite-Acceptance value in the InviteResponse and sends a SIP 200 OK response to the SIP server, where the response carries an SDP description that includes information indicating the file is a file receiving request and the name, type, size, and Hash value of the file, such as:
v=0
o=bob 2890844656 2890844656 IN IP4 gateway.example.com
s=
c=IN IP4 gateway.example.com
t=00
m=message 8888 TCP/MSRP *
a=recvonly
a=accept-types:message/cpim
a=accept-wrapped-types: *
a=path:msrp://gateway.example.com:8888/9di4ea;tcp
a=file-selector:name:"My cool picture.jpg" type:image/jpeg
   size:4092 hash:sha-1:72245FE8653DDAF371362F86D471913EE4A2CE2

S216. The SIP server forwards the SIP 200 OK response to the SIP client.

S217. The SIP client sends a SIP ACK message to the SIP server.

S218. The SIP server forwards the SIP ACK message to the GW.

S219. An MSRP session is set up between the SIP client and the GW for file transfer.

S220. The SIP client sends the file to the GW via an MSRP SEND message. Depending on the file size, there may be multiple MSRP SEND messages.

S221. The GW sends an MSRP OK response to the SIP client.

S222. After the file transfer is complete, the SIP client sends a SIP BYE request to the SIP server to request end of the MSRP session and release of the MSRP session resource.

If a SIP re-INVITE request is sent in step S201, a SIP re-INVITE request is also sent in this step.

S223. The SIP server forwards the SIP BYE request to the GW.

S224. The GW sends a SIP 200 OK response to the SIP server to end the MSRP session and release the session resource in the SIP domain.

S225. The SIP server forwards the SIP 200 OK response to the SIP client.

S226. After step S220, the GW completes receiving the file and sends the file in a format adapted to an IMPS message to the IMPS server via a SendMessageRequest, in the Message-Info structure of which, ContentType is "image/jpeg", ContentSize is "4092" and ContentName is "My cool picture.jpg".

S227. The IMPS server sends a SendMessageResponse to the GW.

S228. After step S226, the IMPS server sends a message to the IMPS client according to the message receiving mode set in the IMPS domain. In this embodiment, the Push mode is set in the IMPS domain. Therefore, the IMPS server sends a NewMessage request to the IMPS client.

S229. The IMPS client sends a MessageDelivered response to the IMPS server. The entire process ends.

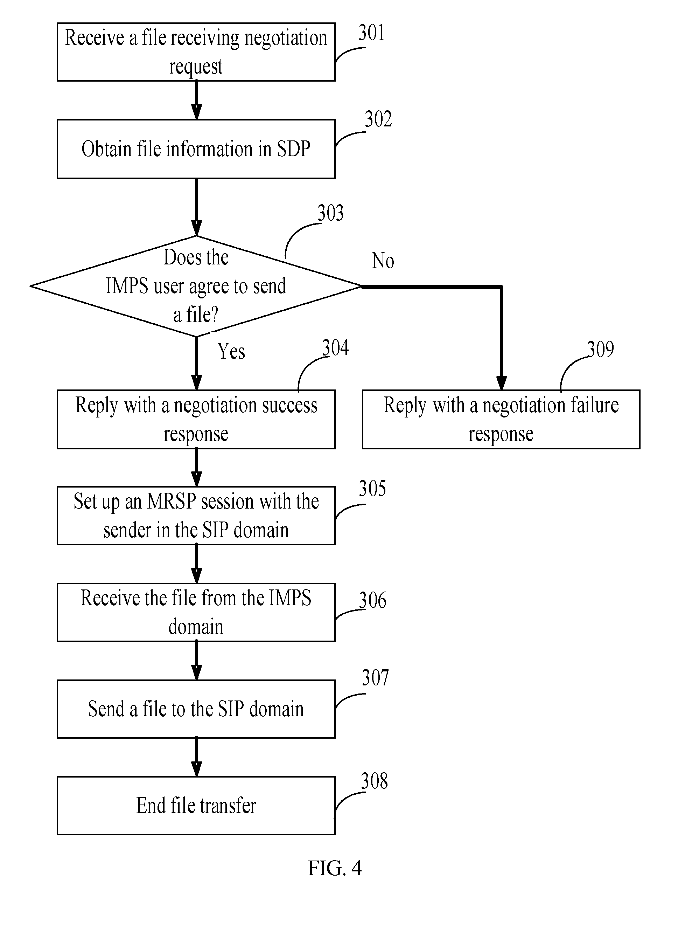

A second file transfer method provided according to the second embodiment of the present disclosure is also implemented based on the networking structure shown in FIG. 1. In this embodiment, the first domain is a SIP domain and the first protocol type is SIP; the second domain is an IMPS domain and the second protocol type is IMPS; a SIP user actively requests reception of a file (for example, from a web bulletin board, the SIP user knows an IMPS user has a file, and requests the file from the IMPS user); the GW receives a SIP file receiving negotiation request from the SIP domain and returns a SIP file transfer negotiation response with respect to the file receiving negotiation request to the SIP domain according to the feedback of the IMPS domain. A negotiation result is determined according to the feedback of the IMPS domain and the file is transferred between the domains according to the negotiation result. As shown in FIG. 4, the method includes:

S301. The GW receives a file transfer negotiation request from the SIP domain. The request carries an SDP description that records a file receiving negotiation request.

If no session exists between the SIP domain and the IMPS domain, the request is a new SIP INVITE request; if a session already exists between the SIP domain and the IMPS domain, the request may be a SIP re-INVITE request; if an early session exists between the SIP domain and the IMPS domain, the request may be a SIP UPDATE request.

S302. The GW reads the SDP description in the SIP file transfer negotiation request and extracts the information of the file to be transferred as described in the SDP description.

S303. The GW judges whether the IMPS user agrees to send the file; if the IMPS user agrees to send the file, the process proceeds to step S304 or else to step S309.

In this step, the GW may send an inquiry to the IMPS domain so as to receive a reply from the IMPS domain, according to which the GW can determine whether the IMPS user agrees to send the file. The inquiry and reply may be implemented via an Invite or System Message, where the Invite message may be an instant message or an application-application.

S304. The GW replies to the SIP domain with a negotiation success response.

S305. The GW sets up an MSRP session for file transfer according to the negotiation result.

S306. The GW receives the file sent by the IMPS domain via an instant message.

S307. The GW compares parameters of the file sent by the IMPS domain with the file information described in the SDP description carried in the initial file transfer negotiation request, such as the name, size and type of the file, and forwards the received file to the SIP domain via the MSRP session set up in step S305.

S308. The GW ends file transfer and negotiates a new session or ends the current session. The process ends.

S309. The GW replies to the SIP domain with a negotiation failure response. The state before the SIP domain sends the file transfer negotiation request is restored. There may or may not be a session between the GW and the SIP domain. The process ends.

In the second embodiment of the present disclosure, if the file receiving negotiation request sent by the SIP domain includes multiple file receiving requests, the IMPS domain checks whether the user agrees to send the file with respect to each file receiving request and synthesizes the check results into one SDP description, which is carried in a SIP response and returned to the SIP domain.

In the second embodiment of the present disclosure, if the SDP description in a request sent by the SIP domain includes both file sending and file receiving requests, the IMPS domain will carry out processing with respect to each request according to the request type to check whether the IMPS user will receive or send the file and synthesizes the check results into one SDP description, which is carried in a SIP response and returned to the SIP domain.

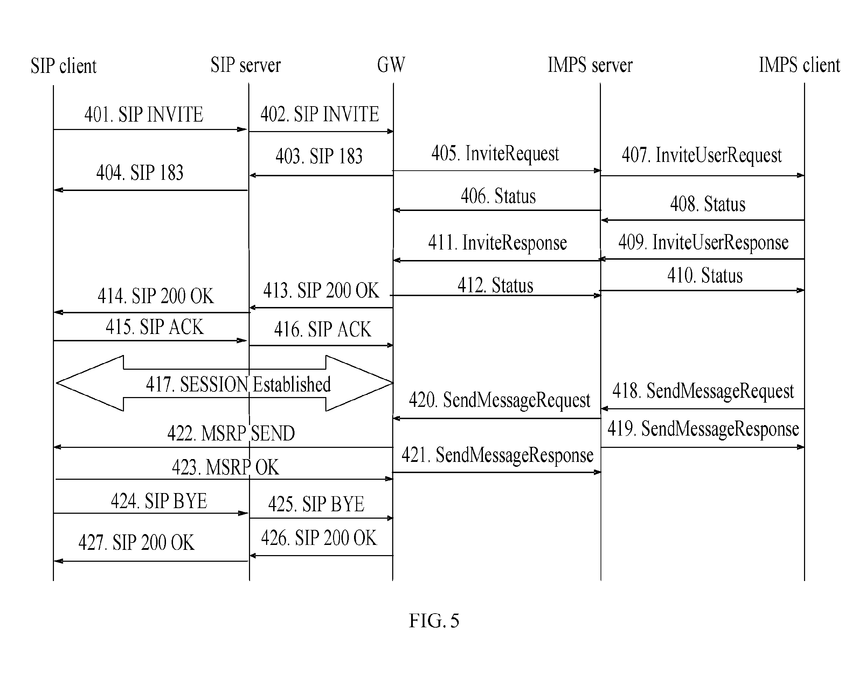

An example is described to explain the second embodiment in detail. In the example, the first domain is a SIP domain and the first protocol type is SIP; the second domain is an IMPS domain and the second protocol type is IMPS. A specific process of the example is shown in FIG. 5, including:

S401. A SIP user wants to request a file from an IMPS user and sends a SIP INVITE request via a SIP client; the request carries an SDP description for file transfer, including information indicating the request is a file receiving request and the name, type, size, and Hash value of the file. The SDP description may be as follows:
v=0
o=alice 2890844526 2890844526 IN IP4 alicepc.example.com
s=
c=IN IP4 alicepc.example.com
t=00
m=message 7654 TCP/MSRP *
a=recvonly
a=accept-types:message/cpim
a=accept-wrapped-types:image/jpeg
a=path:msrp://alicepc.example.com:7654/jshA7we;tcp
a=file-selector:name:"My cool picture.jpg"

S402. The SIP INVITE request is first routed to a SIP server, which, after certain processing, for example, determining the next hop, forwards the SIP INVITE request to a GW.

S403. The GW sends a SIP 183 provisional response to the SIP server.

S404. The SIP server forwards the SIP 183 response to the SIP client.

S405. The GW receives the SIP INVITE request and determines it is a file receiving request and therefore needs to inquire whether the IMPS user agrees to send the file. The GW sends an InviteRequest to the IMPS domain; the Invite-Type element of the request may be set to "IM" (instant message) or "AP" (end-to-end application). In the case of "IM", after successful negotiation, the file is carried in an instant message; in the case of "AP", after successful negotiation, the file is transferred via an application agreed in the negotiation. In this embodiment, Invite-Type is set to "IM". The Invite-Reason element of the request may describe that the SIP user wants to obtain the file and include properties of the file to be received obtained from the SDP description. The Validity element of the request may be set according to GW settings and its value is equal to the time when the SIP INVITE request can be held. If no response is received by the GW from the IMPS domain within the time, the GW replies to the SIP domain with a failure response.

S406. The IMPS server sends a Status response with respect to the InviteRequest to the GW.

S407. The IMPS server converts the InviteRequest into an InviteUserRequest and sends it to the IMPS client.

S408. The IMPS client receives the InviteUserRequest, presents it to the IMPS user and meanwhile sends a Status response to the IMPS server.

S409. The IMPS user agrees to send the file by sending an InviteUserResponse to the IMPS server via the IMPS client, with the Invite-Acceptance attribute in the response set to "Yes", indicating the IMPS user agrees to send the file via an instant message. If the IMPS user does not agree to send the file, the Invite-Acceptance attribute in the response is set to "No".

S410. The IMPS server receives the InviteUserResponse and sends a corresponding Status response to the IMPS client.

S411. The IMPS server maps the InviteUserResponse into an InviteResponse and sends the InviteResponse to the GW

S412. The GW sends a Status response to the IMPS server.

S413. The GW determines that the IMPS user agrees to send the file according to the Invite-Acceptance value in the InviteResponse and replies with a SIP 200 OK response, which carries an SDP description that includes information indicating the file is a file receiving request and the name, type, size, and Hash value of the file. The SDP description may be as follows:
v=0
o=bob 2890844656 2890855439 IN IP4 gateway.example.com
s=
c=IN IP4 gateway.example.com
t=00
m=message 8888 TCP/MSRP *
a=sendonly
a=accept-types:message/cpim
a=accept-wrapped-types: *
a=path:msrp://gateway.example.com:8888/9di4ea;tcp
a=file-selector:name:"My cool picture.jpg"

S414. The SIP server forwards the SIP 200 OK response to the SIP client.

S415. The SIP client sends a SIP ACK request to the SIP server.

S416. The SIP server forwards the SIP ACK request to the GW.

S417. An MSRP session is set up between the SIP client and the GW for file transfer.

S418. After step S410, the IMPS client sends the file via a SendMessageRequest, in the Message-Info structure of which, ContentName is "My cool picture.jpg" and the message content is the file.

S419. The IMPS server sends a SendMessageResponse to the IMPS client.

S420. After step S418, the IMPS server sends a SendMessageRequest to the GW.

S421. The GW sends a SendMessageResponse to the IMPS server.

S422. After step S420, the GW determines that the SendMessageRequest is a message sending request and that an appropriate MSRP session is already negotiated in the SIP domain for file transfer; the GW sends an MSRP SEND request via the MSRP session, placing the received file in a proper format into the MSRP SEND request. Depending on the file size, there may be multiple MSRP SEND requests.

S423. The SIP client sends an MSRP OK response to the GW.

S424. After the file transfer is complete, the SIP client sends a SIP BYE request to the SIP server to request end of the MSRP session and release of the MSRP session resource.

S425. The SIP server forwards the SIP BYE request to the GW.

S426. The GW sends a SIP 200 OK response to end the MSRP session and release the session resource in the SIP domain.

S427. The SIP server forwards the SIP 200 OK response to the SIP client. The process ends.

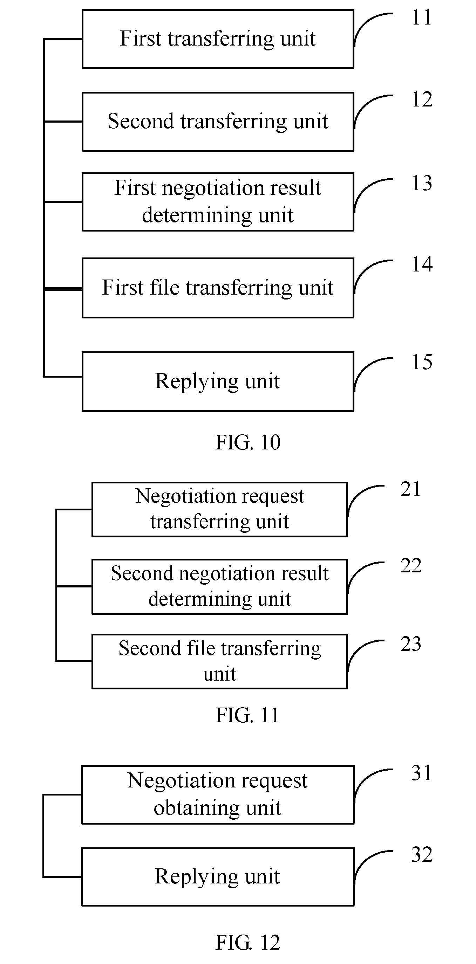

According to the processes of the first and second embodiments of the present disclosure, a GW is provided. As shown in FIG. 10, the GW includes a first transferring unit 11, a second transferring unit 12, a first negotiation result determining unit 13 and a first file transferring unit 14. The first negotiation result determining unit 13 further includes a judging subunit, a request processing subunit and a first negotiation result determining subunit. The request processing subunit further includes a first mapping subunit and a first transferring subunit. The first transferring unit 14 further includes a first file transferring subunit or a second file transferring subunit. The GW may further include a replying unit 15.

The first transferring unit 11 is adapted to obtain a file transfer negotiation request via a first protocol type from a first domain.

The second transferring unit 12 is adapted to obtain information returned by a second domain. The specific processing is as follows:

A first obtaining subunit is adapted to obtain file transfer capability information of a second domain client returned by the second domain.

The first negotiation result determining unit 13 is adapted to determine a negotiation result according to the information returned by the second domain. The specific processing is as follows:

The judging subunit is adapted to judge whether the second domain client is able to transfer the file according to the file transfer capability information and if it determines that file transfer is supported, further adapted to activate the request processing subunit for processing.

The request processing subunit is adapted to: map the file transfer negotiation request via the first protocol type from the first domain into a file negotiation request via a second protocol type in the second domain and send the mapped file transfer negotiation request to the second domain. The specific processing is as follows:

The first mapping subunit is adapted to: extract the SDP description carried in the SIP file transfer negotiation request sent by a SIP domain (the first domain) when the judging subunit determines file transfer is supported and add metadata information in the SDP description to an Invite-Reason element of an IMPS negotiation request.

The first transferring subunit is adapted to send the IMPS negotiation request obtained after the first mapping subunit completes the addition process to a device in an IMPS domain (the second domain).

The first negotiation result determining subunit is adapted to determine a file transfer negotiation result with the second domain according to a file transfer negotiation response returned by a second domain server with respect to the file transfer negotiation request sent by the request processing subunit; or when the judging subunit determines that file transfer is not supported, adapted to regard the result of file transfer negotiation with the second domain fails.

The first file transferring unit 14 is adapted to transfer the file between the first domain and the second domain according to the negotiation result. The specific processing is as follows:

The first file transferring subunit is adapted to: complete mapping of a message carrying a file (referred to as a message carrying file hereunder) exchanged between the first domain and the second domain after it is determined that the negotiation is successful according to information returned by the second domain and transfer the mapped message carrying file to the corresponding domain; or the second file transferring subunit is adapted to refuse to transfer the message carrying file exchanged between the first domain and the second domain when the negotiation fails.

The replying unit 15 is adapted to: map the result of file transfer negotiation with the second domain determined by the first negotiation result determining unit 13 into a file transfer negotiation response of the first protocol type and return the mapped response to the first domain.

According to the processes of the first and second embodiments of the present disclosure, another GW is provided, which is different from the preceding GW in that:

The second transferring unit 12 does not include the first obtaining subunit but includes a mapping subunit and a second obtaining subunit instead. Herein, the mapping subunit includes a fourth mapping subunit and a fourth transferring subunit. The first negotiation result determining unit 13 does not include the judging subunit, request processing subunit and the first negotiation result determining subunit but instead, includes a fourth negotiation result determining subunit. Other parts are the same as the counterparts in the preceding GW.

The first transferring unit 11 is adapted to obtain a file transfer negotiation request via a first protocol type from a first domain.

The second transferring unit 12 is adapted to obtain information returned by a second domain. The specific processing is as follows:

The mapping subunit is adapted to: map the file transfer negotiation request via the first protocol type from the first domain into a file transfer negotiation request via a second protocol type for file transfer negotiation with the second domain and send the mapped file transfer negotiation request to the second domain. The specific processing is as follows:

The fourth mapping subunit is adapted to: extract the SDP description in the SIP file transfer negotiation request sent by a SIP domain (the first domain) and add metadata information in the SDP description to an Invite-Reason element of the IMPS negotiation request; the fourth transferring subunit is adapted to transfer the IMPS negotiation request obtained after the fourth mapping subunit completes the addition process to a device in an IMPS domain (the second domain).

The second obtaining subunit is adapted to obtain the response returned by the second domain with respect to the received file transfer negotiation request.

The first negotiation result determining unit 13 is adapted to determine a negotiation result according to the information returned by the second domain. The specific processing is as follows:

The fourth negotiation result determining subunit is adapted to determine a result of file transfer negotiation with the IMPS domain (the second domain) according to the file transfer negotiation response returned by an IMPS server in the second domain.

The first file transferring unit 14 is adapted to transfer the file between the first domain and the second domain according to the negotiation result. The specific processing is as follows:

The first file transferring subunit is adapted to: complete mapping of a message carrying file exchanged between the first domain and the second domain after it is determined that the negotiation is successful according to information returned by the second domain and transfer the mapped message carrying file to the corresponding domain. The specific processing is as follows:

A SIP message carrying a file sent by the SIP domain is mapped into an IMPS message carrying a file and the IMPS message is sent to the IMPS domain; or an IMPS message carrying a file sent by the IMPS domain is mapped into a file carrying SIP message and the SIP message is sent to the SIP domain.

The second file transferring subunit is adapted to refuse to transfer the message carrying file exchanged between the first domain and the second domain when the negotiation fails.

The replying unit 15 is adapted to: map the result of file transfer negotiation with the second domain determined by the first negotiation result determining unit 13 into an f response of the first protocol type and return the ile transfer negotiationresponse to the first domain.

A third file transfer method provided according to the third embodiment of the present disclosure is still implemented based on the networking structure shown in FIG. 1. In this embodiment, the IMPS domain sends a file to the SIP domain actively.

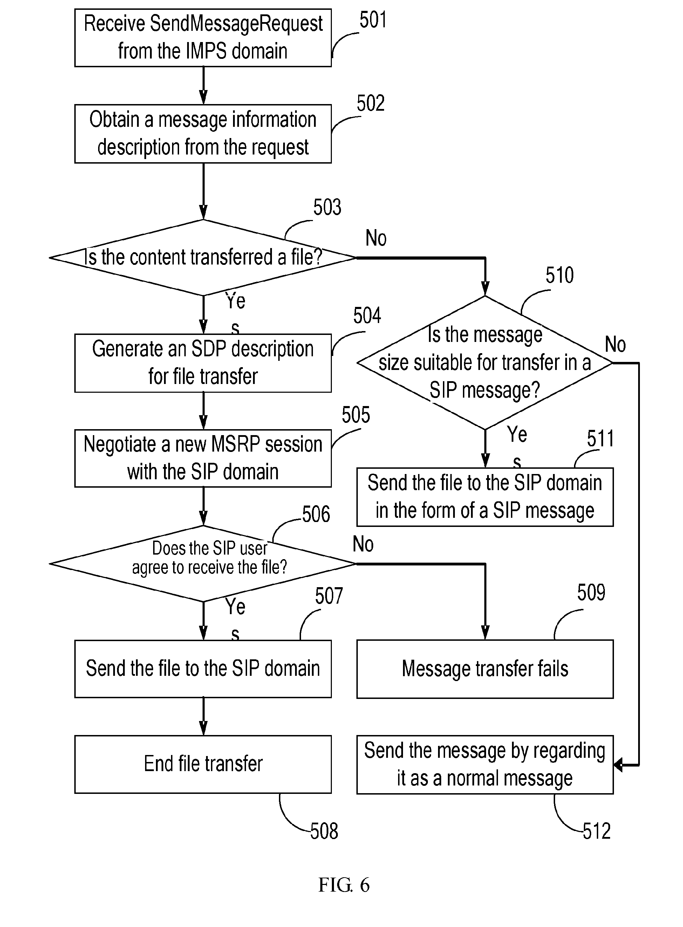

Before the IMPS domain sends a file, there is no negotiation process at the control layer in the IMPS domain but file transfer is negotiated in the SIP domain. Therefore, before the IMPS domain sends a file actively to the SIP domain, file transfer is negotiated between the GW and the SIP domain so that the SIP user knows certain information of the file before receiving the file and thereby determines whether to receive the file. In this case, after the GW receives a IMPS message carrying file from the IMPS domain, the GW sends a SIP file transfer negotiation request to a device in the SIP domain with respect to the file transfer; the GW receives the corresponding file transfer negotiation response from the SIP domain device and determines a negotiation result according to the response. As shown in FIG. 6, the method includes:

S501. The GW receives a SendMessageRequest from the IMPS domain.

S502. The GW obtains a message information description in the SendMessageRequest, including message type and size.

S503. The GW judges whether the content carried in the message is a file; if it is a file, the process goes to step S504 or else to step S510.

The judgment depends on whether ContentName is found in the Message-Info structure of the IMPS message; if ContentName is found, the content transferred is a file or else the content transferred is not a file.

S504. The GW generates an SDP description for file transfer. In the SDP description, the file name is the value of ContentName in step S503, and the file size is the size of the message content in the request message from the IMPS domain; Hash values of the message content are calculated and then included in the SDP description; the file type is the value of ContentType in Message-Info. If the ContentType is Message/CPIM, the file type is the value of Content-type in the message content.

S505. The GW negotiates a new MSRP session with the SIP domain by using the SDP description generated in step S504. If an MSRP session with the SIP domain already exists, the new SDP description may be combined with the old MSRP session to negotiate a new MSRP session.

S506. The GW judges whether the SIP domain agrees to receive the file according to the response from the SIP domain with respect to the SDP description; if the SIP domain agrees, the process proceeds to step S507 or else to step S509.

S507. The GW sends the file received from the IMPS domain to the SIP domain via the new MSRP session.

S508. The GW negotiates a new session or ends the current session after file transfer is complete. The process ends.

S509. The message transfer fails and the SIP domain returns to the state before the file transfer negotiation. The process ends.

S510. The GW judges whether the message size is suitable for transfer via a SIP message; if suitable, the process proceeds to step S511 or else to step S512.

The judgment depends on whether the size of the message sent by the IMPS domain is smaller than 1300 bytes or the minimum Maximum Transfer Unit (MTU) of a SIP transport path minus 200 bytes. If the message size is smaller, the message is suitable for transfer via a SIP message or else the message is not suitable for such transfer.

S511. The GW sends the message in the form of a SIP message to the SIP domain. The process ends.

S512. The GW sends the message by regarding it as a normal message.

If a corresponding MSRP session already exists in the SIP domain, the message content from the IMPS domain is sent via the session; if no such MSRP session exists in the SIP domain, a new MSRP session is negotiated and the message is sent in the case of successful negotiation. If the negotiation fails, the message transfer fails.

In the third embodiment of the present disclosure, if the file is small enough (for example, smaller than 1300 bytes or within the minimum MTU) to be carried in a SIP message, the GW may send the message directly via a SIP message. Therefore, the GW first checks whether the size of the message from the IMPS domain is suitable for transfer to the SIP domain via a SIP message. If suitable, the GW directly sends the message to the SIP domain via a SIP message; if not suitable, the GW further checks whether the message carries a file. In the case of a file, the GW executes steps S504 to S509; otherwise, the GW sends the message to the SIP domain by regarding it as a normal message.

According to the process in the third embodiment of the present disclosure, a GW is provided. As shown in FIG. 11, the GW includes a negotiation request transferring unit 21, a second negotiation result determining unit 22 and a second file transferring unit 23.

The negotiation request transferring unit 21 is adapted to send a SIP file transfer negotiation request to a device in the SIP domain with respect to the file transfer upon reception of a IMPS message carrying a file from the IMPS domain.

The second negotiation result determining unit 22 is adapted to: obtain a response from the SIP domain device with respect to the received file transfer negotiation request and determine a negotiation result according to the response.

The second file transferring unit 23 is adapted to carry out file transfer from the IMPS domain to the SIP domain according to the negotiation result determined by the second negotiation result determining unit 22. The specific processing is as follows:

When the negotiation result determining unit determines that the negotiation is successful, the second file transferring unit 23 maps the IMPS message carrying a file into the SIP message carrying a file and sends the SIP message to the SIP domain; or when the negotiation result determining unit determines that the negotiation fails, the IMPS message carrying a file is discarded.

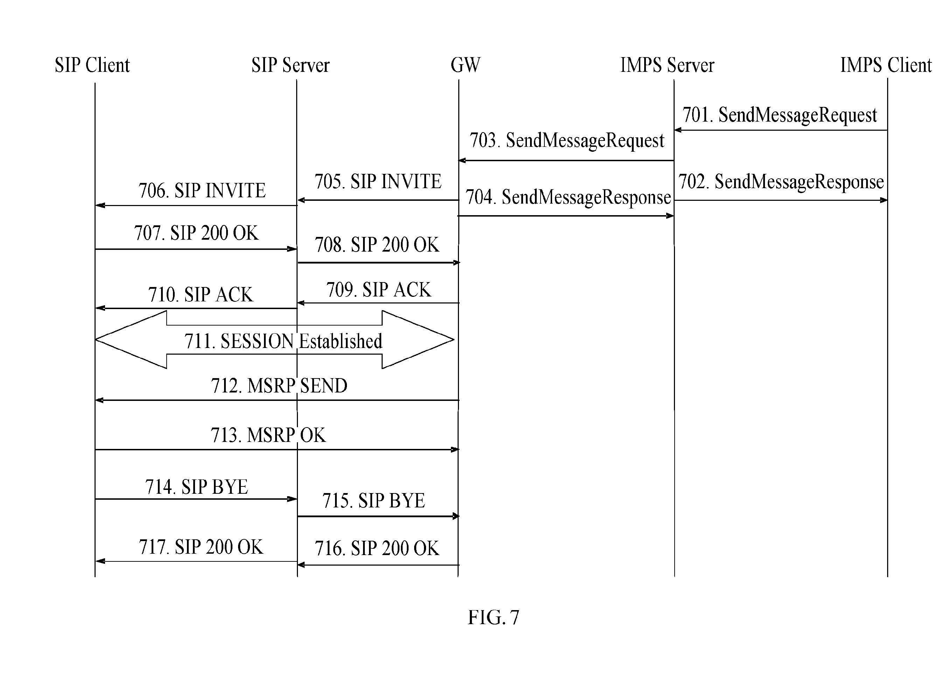

An example is described to explain the third embodiment of the present disclosure in detail. As shown in FIG. 7, the specific process in the example includes:

S701. An IMPS client sends a file via a SendMessageRequest, in the Message-Info structure of which, ContentName is "My cool picture.jpg" and the message content is the file.

S702. An IMPS server sends a SendMessageResponse to the IMPS client.

S703. After step S701, the IMPS server sends a SendMessageRequest to the GW.

S704. The GW sends a SendMessageResponse to the IMPS server.

S705. After step S703, the GW determines that the IMPS message is intended to send a file and the file size exceeds a certain value (such as 1300 bytes) so that an MSRP session is required for transfer. The GW therefore sends a SIP INVITE message to the SIP domain, placing the size, name, type and calculated Hash value of the file in the received IMPS message into an SDP description. The SDP description may be as follows:
v=0
o=alice 2890844526 2890844526 IN IP4 gateway.example.com
s=
c=IN IP4 gateway.example.com
t=00
m=message 7654 TCP/MSRP*
i=This is my latest picture
a=sendonly
a=accept-types:message/cpim
a=accept-wrapped-types: *
a=path:msrp:// gateway.example.com:7654/jshA7we;tcp
a=file-selector:name:"My cool picture.jpg" type:image/jpeg
   size:4092 hash:sha-1 :72245FE8653DDAF371362F86D471913EE4A2CE2E
a=disposition:render

S706. The SIP server forwards the SIP INVITE message to the SIP client.

S707. If the SIP user agrees to receive the file, the SIP client sends a SIP 200 OK response. The SIP 200 OK response carries an SDP response, which carries information indicating the request is a file receiving request and the name, type, size and Hash value of the file. The SDP response may be as follows:
v=0
o=bob 2890844656 2890844656 IN IP4 alicepc.example.com
s=
c=IN IP4 alicepc.example.com
t=00
m=message 8888 TCP/MSRP *
a=recvonly
a=accept-types:message/cpim
a=accept-wrapped-types: *
a=path:msrp:// alicepc.example.com:8888/9di4ea;tcp
a=file-selector:name:"My cool picture.jpg" type:image/jpeg
   size:4092 hash:sha-1:72245FE8653DDAF371362F86D471913EE4A2CE2E

S708. The SIP server forwards the SIP 200 OK response to the GW.

S709. The GW sends a SIP ACK request to the SIP server.

S710. The SIP server forwards the SIP ACK request to the SIP client.

S711. An MSRP session is set up between the SIP client and the GW for file transfer.

S712. The GW sends an MSRP SEND request via the established MSRP session, putting the file received from the IMPS domain to the MSRP SEND request in a proper format; depending on the file size, there may be multiple MSRP SEND requests.

S713. The SIP client sends an MSRP OK response to the GW.

S714. After the file transfer is complete, the SIP client sends a SIP BYE request to the SIP server to request end of the MSRP session and release of the MSRP session resource.

S715. The SIP server forwards the SIP BYE request to the GW

S716. The GW sends a SIP 200 OK response to the SIP server to end the MSRP session and release the session resource in the SIP domain.

S717. The SIP server forwards the SIP 200 OK response to the SIP client. The process ends.

A fourth file transfer method is provided according to the fourth embodiment of the present disclosure, where a file is transferred from the IMPS domain to the SIP domain. In this embodiment, a file metadata description, expressed as Invite-File, is added to the InviteRequest and InviteUserRequest via IMPS Invite transactions to describe metadata of the file so as to control file transfer negotiation. A structure of the new file metadata description is given in Table 1.

**Table 1**

| Name | Type | Description |
|---|---|---|
| Direction | String | Direction of file transfer, R for receiving and S for sending. |
| Name | String | File name. |
| Type | String | File MIME type. |
| Size | Integer | File size. |
| Hash | Structure | Hash value of the file. |
| -Algorithm | String | Name of a Hash algorithm. |
| -Value | Hex | Hexadecimal hash value. |

In the case of file transfer negotiation between the SIP domain and the IMPS domain, the Name, Type, Size, and Hash in Table 1 match the file description quadruplet (name, type, size and Hash value) in the SDP description. For example:

A file description in SDP is as follows:

```
      a=sendonly
      a=file-selector:name:"My cool picture.jpg" type:image/jpeg
             size:4092 hash:sha-1:72245FE8653DDAF371362F86D471913EE4A2CE2E
 The corresponding Invite-File structure is:
      <Invite-File>
           <Direction> S </Direction>
           <Name> My cool picture.jpg </Name>
           <Type> image/jpeg </Type>
           <Size> 4092 </Size>
           <Hash>
               <Algorithm> sha-1 </Algorithm>
               <Value> 72245FE8653DDAF371362F86D471913EE4A2CE2E </Value>
           </Hash>
      </Invite-File>
```

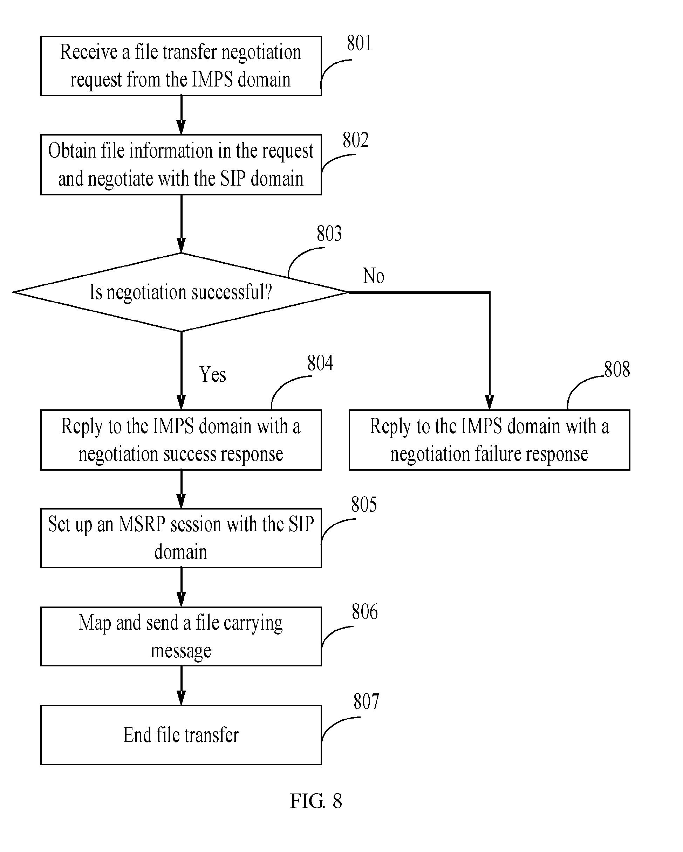

In this embodiment, the GW receives a file transfer negotiation request from the IMPS domain. The request carries a new file metadata description. According to the file metadata description, the GW maps the request into a SDP description and sends the SDP description to the SIP domain via a SIP negotiation request. As shown in FIG. 8, the process in this embodiment includes:

5801. The GW receives a file transfer negotiation request from the IMPS domain; the request carries an Invite-File element for file metadata description.

S802. The GW extracts the file metadata description from the IMPS file transfer negotiation request carrying an additional file metadata description sent by the IMPS domain; the GW adds the metadata information in the file metadata description to an SDP description and sends the SDP description to the SIP domain via a SIP negotiation request to negotiate file transfer with the SIP domain.

S803. The GW determines whether the negotiation is successful according to the result of negotiation with the SIP domain; if the negotiation is successful, the process proceeds to step S804 or else to step S808.

S804. The GW replies to the IMPS domain with a negotiation success response.

S805. The GW sets up an MSRP session with the SIP domain for file transfer. This step and step S804 may be executed in random order.

S806. The GW maps and sends the file transfer message. If the IMPS domain sends a file, the GW converts the IMPS message carrying a file into a SIP message carrying a file and sends the SIP message to the SIP domain; if the SIP domain sends a file, the GW converts the SIP message carrying a file into a IMPS message carrying a file and sends the IMPS message to the IMPS domain.

S807. The file transfer is complete and the MSRP session with the SIP domain for file transfer is released.

S808. The GW replies to the IMPS domain with a negotiation failure response.

From the above description, it is evident that effective file transfer negotiation is conducted between the IMPS domain and the SIP domain in this embodiment and file transfer is also effective according to the negotiation result.

According to the process of the fourth embodiment of the present disclosure, another GW is provided. As shown in FIG. 10, the GW includes a first transferring unit 11, a second transferring unit 12, a first negotiation result determining unit 13 and a first file transferring unit 14. The second transferring unit 12 further includes a mapping subunit and a second obtaining subunit. Herein, the mapping subunit includes a third mapping subunit and a third transferring subunit. The first negotiation result determining unit 13 further includes a third negotiation result determining subunit. The first file transferring unit 14 further includes a first file transferring subunit and a second file transferring subunit. The GW may further include a replying unit 15.

The first transferring unit 11 is adapted to obtain a file transfer negotiation request via a first protocol type from a first domain.

The second transferring unit 12 is adapted to obtain information returned by a second domain. The specific processing is as follows:

The mapping subunit is adapted to: map the file transfer negotiation request via the first protocol type from the first domain into a file transfer negotiation request via a second protocol type for file transfer negotiation with the second domain and send the mapped file negotiation request to the second domain. The specific processing is as follows:

The third mapping subunit is adapted to: extract a file metadata description from an IMPS file transfer negotiation request carrying an additional file metadata description sent by an IMPS domain (the first domain) and add the metadata information in the file metadata description to an SDP description in a SIP negotiation request.

The third transferring subunit is adapted to send the SIP negotiation request obtained after the third mapping subunit completes the addition process to a device in a SIP domain (the second domain).

The second obtaining subunit is adapted to obtain the response returned by the second domain with respect to the received file transfer negotiation request.

The first negotiation result determining unit 13 is adapted to determine a negotiation result according to the information returned by the second domain. The specific processing is as follows:

The third negotiation result determining subunit determines an appropriate file transfer negotiation result according to the file transfer negotiation response from a client of the SIP domain (the second domain). The response is returned by the SIP client according to whether its capability meets the requirement of file transfer, or whether its capability meets the requirement of file transfer and the obtained user response or user configuration, after the SIP client receives the SIP file transfer negotiation request.

The first file transferring unit 14 is adapted to transfer the file between the first domain and the second domain according to the negotiation result. The specific processing is as follows:

The first file transferring subunit is adapted to: complete mapping of a message carrying a file exchanged between the first domain and the second domain after it is determined that the negotiation is successful according to information returned by the second domain and transfer the mapped message carrying a file to the corresponding domain. The specific processing is as follows:

The first file transferring subunit maps a file carrying SIP message into a file carrying IMPS message and sends the IMPS message to the IMPS domain; or the first file transferring subunit maps a file carrying IMPS message from the IMPS domain into a file carrying SIP message and sends the SIP message to the SIP domain.

The second file transferring subunit is adapted to refuse to transfer the message carrying a file exchanged between the first domain and the second domain when the negotiation fails.

The replying unit 15 is adapted to: map the result of file transfer negotiation with the second domain determined by the first negotiation result determining unit 13 into a file transfer negotiation response of the first protocol type and return the response to the first domain.

In the fourth embodiment, a file metadata description is added to an IMPS file transfer negotiation request such as InviteRequest and InviteUserRequest. Based on the idea of the fourth embodiment, the first embodiment where the GW processes the SIP file transfer negotiation request (the file sending negotiation request) and the second embodiment where the GW processes the SIP file transfer negotiation request (the file receiving negotiation request) may be implemented in the following way:

The GW extracts the SDP description carried in the SIP file transfer negotiation request and adds the metadata information in the SDP description to a file metadata description in an IMPS negotiation request.

The IMPS negotiation request carrying an additional file metadata description is sent to the IMPS client.

The GW receives the file transfer negotiation response from the IMPS client. The response is returned by the IMPS client according to whether its capability meets the requirement of file transfer, or whether its capability meets the requirement of file transfer and the obtained user response or user configuration, after the IMPS client receives the IMPS file transfer negotiation request carrying an additional file metadata description. The GW determines a file transfer negotiation result according to the file transfer negotiation response from the IMPS client.

The GW maps the determined file transfer negotiation result into a SIP file transfer negotiation response and sends the response to the SIP domain.

Then, after the GW determines that the negotiation is successful according to information returned by the second domain, the GW converts the format of the message carrying a file exchanged between the SIP domain and the IMPS domain and sends the message carrying a file to the file receiver; or the GW determines that the negotiation fails according to information returned by the second domain and refuses to transfer the message carrying a file exchanged between the first domain and the second domain.

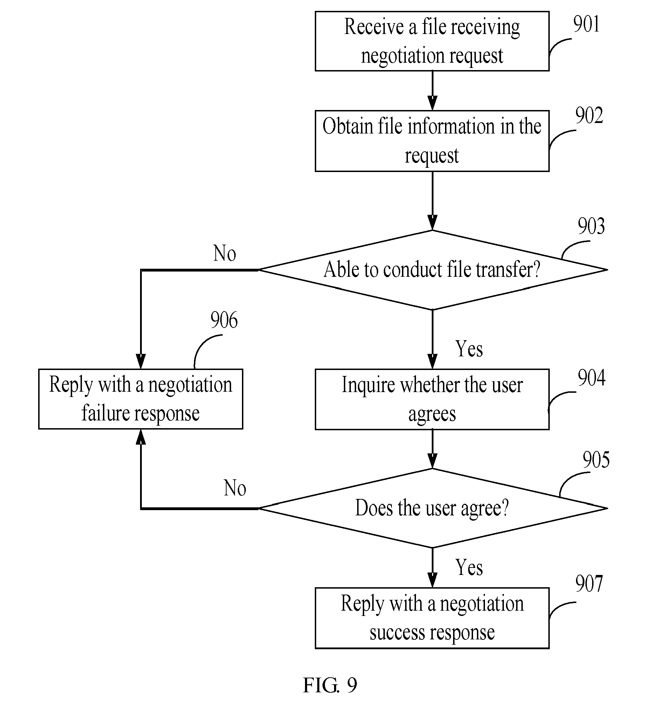

With this solution, when the GW processes a file transfer negotiation request, it is unnecessary to judge whether the IMPS user is able to receive the file and instead, the IMPS client makes the judgment. Other processing is similar to relevant descriptions in the first and second embodiments. Herein, only the processing of the IMPS client is described. As shown in FIG. 9, the processing of the IMPS client includes:

S901. The IMPS client receives a file transfer negotiation request from the GW. The file transfer negotiation request carries an addition file metadata description.

S902. The IMPS client obtains the file information in the file metadata description carried in the file transfer negotiation request.

S903. The IMPS client judges whether it is capable of file transfer. If the file transfer negotiation request is a file sending negotiation request, the IMPS client judges whether it is able to receive the file according to such information as file size obtained in step S902; if it is able to receive the file, the IMPS client executes step S904 or else step S906. If the file transfer negotiation request is a file receiving negotiation request, the IMPS client judges whether it is able to send the file according to the file size and may further determine whether the request file exists according to the name and Hash value. If no such file exists, the IMPS client determines it is unable to send the file. After comprehensive judgment, if the IMPS client determines it is able to send the file, the IMPS client executes step S904 or else step S906.

S904. The IMPS client displays the file information and asks whether the user accepts the file transfer.

The IMPS client may display a list of qualified files chosen in step S903 for choice of the user.

S905. The IMPS client determines whether the user agrees according to the user input; if the user disagrees, the IMPS client executes step S906 or else step S907.

S906. The IMPS client replies with an IMPS file transfer negotiation failure response and ends the process.

S907. The IMPS client replies with an IMPS file transfer negotiation success response and ends the process; in the case of a file receiving request, the IMPS client sends the file chosen by the user to the requestor.

According to the preceding client processing, a client is provided in an embodiment of the present disclosure. As shown in FIG. 12, the client includes a negotiation request obtaining unit 31 and a replying unit 32.

The negotiation request obtaining unit 31 is adapted to receive an IMPS file transfer negotiation request carrying an additional file metadata description.

The replying unit 32 is adapted to determine whether the client is capable of file transfer according to the capability of the client; if incapable, the replying unit 32 replies with a file transfer negotiation failure response or else replies with an appropriate file transfer negotiation response according to a user response or user configuration.

In accordance with the processing in the first and second embodiments of the present disclosure after a file metadata description is added to the Invite requests of the IMPS Invite transaction (InviteRequest or InviteUserRequest), another GW is provided in an embodiment of the present disclosure. As shown in FIG. 10, the GW includes a first transferring unit 11, a second transferring unit 12, a first negotiation result determining unit 13, and a first file transferring unit 14. The second transferring unit 12 further includes a mapping subunit and a second obtaining subunit. Herein, the mapping subunit includes a second mapping subunit and a second transferring subunit. The first negotiation result determining unit 13 further includes a second negotiation result determining subunit. The first transferring unit 14 further includes a first file transferring subunit and a second file transferring subunit. The GW further includes a replying unit 15.

The first transferring unit 11 is adapted to obtain a file transfer negotiation request via a first protocol type from a first domain.

The second transferring unit 12 is adapted to obtain information returned by a second domain. The specific processing is as follows:

The mapping subunit is adapted to: map the file transfer negotiation request via the first protocol type from the first domain into a file transfer negotiation request via a second protocol type for file transfer negotiation with the second domain and send the mapped file negotiation request to the second domain. The specific processing is as follows:

The second mapping subunit is adapted to: extract an SDP description from a SIP file transfer negotiation request sent by a SIP domain (the first domain) and add the metadata information in the SDP description to a file metadata description of an IMPS negotiation request.

The second transferring subunit is adapted to send the IMPS negotiation request obtained after the second mapping subunit completes the addition process to a device in an IMPS domain (the second domain).

The second obtaining subunit is adapted to obtain the response returned by the second domain with respect to the received file transfer negotiation request.

The first negotiation result determining unit 13 is adapted to determine a negotiation result according to the information returned by the second domain. The specific processing is as follows:

The second negotiation result determining subunit in the first negotiation result determining unit determines an appropriate file transfer negotiation result according to the file transfer negotiation response from a client of the IMPS domain (the second domain). The response is returned by the IMPS client according to whether its capability meets the requirement of file transfer, or whether its capability meets the requirement of file transfer and the obtained user response or user configuration, after the IMPS client receives the IMPS file transfer negotiation request carrying an additional file metadata description.

The first file transferring unit 14 is adapted to transfer the file between the first domain and the second domain according to the negotiation result. The specific processing is as follows:

The first file transferring subunit is adapted to: complete mapping of a message carrying a file exchanged between the first domain and the second domain after it is determined that the negotiation is successful according to information returned by the second domain and transfer the mapped message carrying a file to the corresponding domain. The specific processing is as follows:

The file carrying SIP message sent by the SIP domain is mapped into a file carrying IMPS message and the IMPS message is sent to the IMPS domain; or a file carrying IMPS message sent by the IMPS domain is mapped into a file carrying SIP message and the SIP message is sent to the SIP domain.

The second file transferring subunit is adapted to refuse to transfer the message carrying a file exchanged between the first domain and the second domain when the negotiation fails.

The replying unit 15 is adapted to: map the result of file transfer negotiation with the second domain determined by the first negotiation result determining unit into a file transfer negotiation response of the first protocol type and return the response to the first domain.

In the specific implementation of the embodiments of the present disclosure, it is evident that a file transfer negotiation request via a first protocol type sent by a first domain is obtained; information returned by the second domain is obtained; a negotiation result corresponding to the file transfer negotiation request is determined according to the information returned by the second domain and file transfer is conducted between the first domain and the second domain according to the negotiation result. Negotiation of file transfer between the SIP domain and the IMPS domain can therefore be realized so that unnecessary file transfer can be avoided between different domains according to the negotiation result and system resources are efficiently utilized.

Those skilled in the art understand that all or part of the steps in the methods provided in the foregoing embodiments of the present disclosure may be implemented by hardware following instructions of a program. The program may be stored in a computer readable storage medium, such as a Read-Only Memory (ROM), a Random Access Memory (RAM), a magnetic disk and a compact disk.

Although the invention has been described through several exemplary embodiments, the invention is not limited to such embodiments. It is apparent that those skilled in the art can make various modifications and variations to the invention without departing from the spirit and scope of the present disclosure. The invention is intended to cover these modifications and variations provided that they fall in the scope of protection defined by the following claims or their equivalents.

## Claims

1. A method for transferring a file, **characterized in** comprising:
obtaining, a file transfer negotiation request via the first protocol sent by the first domain;
obtaining, a feedback of the second domain;
determining, a negotiation result corresponding to the file transfer negotiation request according to the feedback of the second domain; and
transferring, a file between the first domain and the second domain according to the result of the negotiation.

2. The method of claim 1, **characterized in that**,
the first domain comprises SIP domain; the first protocol comprises SIP and/or SDP; and
the second domain comprises IMPS domain; the second protocol comprises IMPS.

3. The method of claim 2, **characterized in that**, the obtaining a feedback of the second domain comprises:
obtaining file transfer capability information of a second client returned by the second domain.

4. The method of claim 3, **characterized in that**, the determining a result negotiation with respect to the file transfer negotiation request according to the feedback of the second domain comprises:
regarding the negotiation result is failure, when judging that the second domain does not support file transfer according to the file transfer capability information; or
judging, that the second domain supports file transfer according to the file transfer capability information;
mapping, a file transfer negotiation request via the first protocol sent by the first domain to a file transfer negotiation request via the second protocol;
transferring, the file transfer negotiation request via the second protocol to the second domain; and
judging, the negotiation result between the first domain and the second domain, according to a file transfer negotiation response with respect to the file transfer negotiation request returned by the second domain.

5. The method of claim 4, **characterized in that**, the mapping a file transfer negotiation request via the first protocol sent by the first domain to a file transfer negotiation request via the second protocol comprises:
extracting, SDP description carried in the file transfer negotiation request via SIP protocol, which is sent by SIP domain as the first domain;
adding, metadata information in the SDP description, which is related to the file transfer, to an Invite-Reason element of an IMPS negotiation request.

6. The method of claim 1, **characterized in that**,
the first domain comprises SIP domain, the first protocol comprises SIP and/or SDP, the second domain comprises IMPS domain, and the second protocol comprises IMPS carrying an additional file metadata description; or
the first domain comprises IMPS domain, the first protocol comprises IMPS carrying an additional file metadata description, and the second domain comprises SIP domain, the second protocol comprises SIP and/or SDP.

7. The method of claim 6, **characterized in that**, the obtaining a feedback of the second domain comprises:
mapping, a file transfer negotiation request via the first protocol sent by the first domain to a file transfer negotiation request via the second protocol;
transferring, the file transfer negotiation request via the second protocol to the second domain; and
obtaining, a corresponding file transfer negotiation response returned by the second domain in response to the file transfer negotiation request.

8. The method of claim 7, **characterized in that**, the mapping a file transfer negotiation request via the first protocol sent by the first domain to a file transfer negotiation request via the second protocol comprises:
extracting, SDP description carried in the file transfer negotiation request via SIP protocol, which is sent by SIP domain as the first domain and adding, metadata information in the SDP description, which is related to the file transfer, to an Invite-Reason element of an IMPS negotiation request; or
extracting, SDP description carried in the file transfer negotiation request via SIP protocol, which is sent by SIP domain as the first domain and adding, metadata information in the SDP description, which is related to the file transfer, to an Invite-Reason element of an IMPS negotiation request carrying an additional file metadata description; or
extracting, a file metadata description from the IMPS file transfer negotiation request carrying an additional file metadata description sent by an IMPS domain as the first domain, and adding, the metadata information in the file metadata description, which is related to the file transfer, to an SDP description in a SIP negotiation request.

9. The method of claim 7, **characterized in that**, the determining a result negotiation with respect to the file transfer negotiation request according to the feedback of the second domain comprises:
determining, a result of file transfer negotiation with the IMPS domain as the second domain according to the file transfer negotiation response returned by an IMPS server in the second domain; or
determining, an appropriate file transfer negotiation result according to the file transfer negotiation response from a IMPS client of the IMPS domain as the second domain, wherein the file transfer negotiation response is returned by the IMPS client according to whether the client's capability meets the requirement of file transfer, or whether its capability meets the requirement of file transfer and the obtained user response or user configuration, after the IMPS client receives the IMPS file transfer negotiation request carrying an additional file metadata description; or
determining, an appropriate file transfer negotiation result according to the file transfer negotiation response from a SIP client of the SIP domain as the second domain; wherein the file transfer negotiation response is returned by the SIP client, after the SIP client receives the SIP file transfer negotiation request, according to whether the client's capability meets the requirement of file transfer, or whether the client's capability meets the requirement of file transfer and obtained user response or obtained user configuration.

10. The method as any one of claims 5, 8 or 9, **characterized in that**, wherein the file transfer negotiation request via IMPS protocol comprises Invite transactions via IMPS protocol or system message via IMPS protocol.

11. The method of claim 1, **characterized in that**, the determining a negotiation result according to the feedback of the second domain and transferring a file between the first domain and the second domain according to the result of the negotiation comprises:
completing, mapping of a message carrying a file exchanged between the first domain and the second domain after it is determined that the negotiation is successful and transferring, the mapped message carrying a file to the corresponding domain; or
refusing, to transfer the message carrying a file exchanged between the first domain and the second domain when the negotiation fails.

12. The method of claim 11, **characterized in that**, when the message carrying a file is a message via SIP protocol, the message carrying a file is sent via an MSRP session.

13. The method of claim 11, **characterized in that**, when the message carrying a file is a message via IMPS protocol, the message carrying a file is sent via an IMPS IM.

14. The method of claim 1, **characterized in that**, the method further comprises:
mapping, the result of file transfer negotiation with the second domain determined into a file transfer negotiation response of the first protocol type; and
returning, the file transfer negotiation response to the first domain.

15. A gateway, **characterized in** comprising:
a first transferring unit, adapted to obtain a file transfer negotiation request via a first protocol type from a first domain;
a second transferring unit, adapted to obtain information returned by a second domain;
a first negotiation result determining unit, adapted to determine a negotiation result according to the information returned by the second domain, and
a first file transferring unit, adapted to transfer a file between the first domain and the second domain according to the negotiation result.

16. The gateway of claim 15, **characterized in that**, the second transferring unit comprises:
a first obtaining subunit, adapted to obtain file transfer capability information of a second domain client returned by the second domain.

17. The gateway of claim 16, **characterized in that**, the first negotiation result determining unit comprises:
a judging subunit, adapted to judge whether the file transfer is supported according to the file transfer capability information and if it determines that file transfer is supported, further adapted to activate a request processing subunit for processing;
a request processing subunit, adapted to map the file transfer negotiation request via the first protocol type from the first domain into a file negotiation request via a second protocol type in the second domain and send the mapped file transfer negotiation request to the second domain; and
a first negotiation result determining subunit, adapted to determine a file transfer negotiation result with the second domain according to a file transfer negotiation response returned by a second domain server with respect to the file transfer negotiation request sent by the request processing subunit; or when the judging subunit determines that file transfer is not supported, adapted to regard the result of file transfer negotiation with the second domain as failure.

18. The gateway of claim 17, **characterized in that**, the request processing subunit comprises:
a first mapping subunit, adapted to extract the SDP description carried in the SIP file transfer negotiation request sent by a SIP domain as the first domain when the judging subunit determines the file transfer is supported and add metadata information in the SDP description to an Invite-Reason element of an IMPS negotiation request; and
a first transferring subunit, adapted to send the IMPS negotiation request obtained after the first mapping subunit completes the addition process to a device in an IMPS domain as the second domain.

19. The gateway of claim 15, **characterized in that**, the second transferring unit comprises:
a mapping subunit, adapted to map the file transfer negotiation request via the first protocol type from the first domain into a file transfer negotiation request via a second protocol type and send the file transfer negotiation request via a second protocol type to the second domain; and
a second obtaining subunit, adapted to obtain the response returned by the second domain with respect to the received file transfer negotiation request.

20. The gateway of claim 19, **characterized in that**, the mapping subunit comprises:
a second mapping subunit and a second transferring subunit, wherein the second mapping subunit is adapted to extract an SDP description from a SIP file transfer negotiation request sent by a SIP domain as the first domain and add the metadata information in the SDP description to a file metadata description of an IMPS negotiation request; and, the second transferring subunit is adapted to send the IMPS negotiation request obtained after the second mapping subunit completes the addition process to a device in an IMPS domain as the second domain; or
a third mapping subunit and a third transferring subunit, wherein the third mapping subunit is adapted to: extract a file metadata description from an IMPS file transfer negotiation request carrying an additional file metadata description sent by an IMPS domain as the first domain and add the metadata information in the file metadata description to an SDP description in a SIP negotiation request; and the third transferring subunit is adapted to send the SIP negotiation request obtained after the third mapping subunit completes the addition process to a device in a SIP domain as the second domain; or
a fourth mapping subunit and a fourth transferring subunit, wherein the fourth mapping subunit is adapted to: extract the SDP description in the SIP file transfer negotiation request sent by a SIP domain as the first domain and add metadata information in the SDP description to an Invite-Reason element of the IMPS negotiation request; and the fourth transferring subunit is adapted to transfer the IMPS negotiation request obtained after the fourth mapping subunit completes the addition process to a device in an IMPS domain as the second domain.

21. The gateway of claim 19 or 20, **characterized in that**, the first negotiation result determining unit comprises:
a second negotiation result determining subunit, adapted to determine an appropriate file transfer negotiation result according to the file transfer negotiation response from a client of the IMPS domain as the second domain, wherein the file transfer negotiation response is returned by the IMPS client according to whether the client's capability meets the requirement of file transfer, or whether the client's capability meets the requirement of file transfer and obtained user response or obtained user configuration, after the IMPS client receives the IMPS file transfer negotiation request carrying an additional file metadata description; or
a third negotiation result determining subunit, adapted to determine an appropriate file transfer negotiation result according to the file transfer negotiation response from a client of the SIP domain as the second domain, wherein the file transfer negotiation response is returned by the SIP client according to whether the client's capability meets the requirement of file transfer, or whether the client's capability meets the requirement of file transfer and obtained user response or obtained user configuration, after the SIP client receives the SIP file transfer negotiation request; or
a fourth negotiation result determining subunit, adapted to determine the result of file transfer negotiation with the IMPS domain as the second domain according to the file transfer negotiation response returned by an IMPS server in the second domain.

22. The gateway of claim 15, **characterized in that**, the first file transferring unit comprises:
a first file transferring subunit, adapted to complete mapping of a message carrying file exchanged between the first domain and the second domain after it is determined that the negotiation is successful according to information returned by the second domain and transfer the mapped message carrying file to the corresponding domain.

23. The gateway of claim 15, **characterized in**, further comprising:
a replying unit, adapted to map the result of file transfer negotiation with the second domain determined by the first negotiation result determining unit into a file transfer negotiation response via the first protocol type and return the file transfer negotiation response to the first domain.

24. A client, **characterized in**, comprising:
a negotiation request obtaining unit, adapted to receive an IMPS file transfer negotiation request based on addition of a file metadata description; and
a replying unit, adapted to determine whether the client is capable of file transfer according to the client's capability, and if incapable, adapted to reply with a file transfer negotiation failure response or if capable, adapted to reply with an appropriate file transfer negotiation response according to a user response or user configuration.

25. A file transfer method, **characterized in** comprising:
sending, a file transfer negotiation request via SIP protocol to a SIP domain with respect to transfer of the file after receiving an IMPS message carrying a file from an IMPS domain;
obtaining, information carried in a response returned by the SIP domain with respect to the file transfer negotiation request; and
determining, a negotiation result with respect to the file transfer negotiation request according to the information carried in the response and transferring file between the IMPS domain and the SIP domain according to the negotiation result.

26. The method of claim 25, **characterized in that**, the file transfer negotiation request via SIP protocol carries SDP description, and the SDP description comprises information requesting to respond.

27. The method of claim 25 or 26, **characterized in that**, the transferring file between the IMPS domain and the SIP domain according to the negotiation result comprises:
mapping, the IMPS message carrying a file into the SIP message carrying a file,
and sending, the SIP message to the SIP domain, when the negotiation result is successful; or
discarding, the IMPS message carrying a file when the negotiation result is failure.

28. The method of claim 27, **characterized in** sending the SIP message to the SIP domain via an MSRP session.

29. A gateway, **characterized in** comprising:
a negotiation request transferring unit, adapted to send a file transfer negotiation request via SIP protocol with respect to transfer of the file to a device in a SIP domain, after receiving an IMPS message carrying a file from an IMPS domain;
a second negotiation result determining unit, adapted to obtain information carried in a response returned by the SIP domain with respect to the file transfer negotiation request; and
a second file transferring unit, adapted to determine a negotiation result with respect to the file transfer negotiation request according to information carried in the response and transfer file between the IMPS domain and the SIP domain according to the negotiation result.

30. The gateway of claim 29, **characterized in that**, the second file transferring unit comprises:
a third file transferring unit, adapted to map the IMPS message carrying a file into the SIP message carrying a file and send the SIP message to the SIP domain, when the negotiation result is successful; or
a fourth file transferring unit, adapted to discard the IMPS message carrying a file when the he negotiation result is failure.
